# EUROPÄISCHE PATENTSCHRIFT

(11) **EP 3 434 423 B1**
(45) Veröffentlichungstag und Bekanntmachung des Hinweises auf die Patenterteilung: **08.11.2023**
(21) Anmeldenummer: 18181075.5
(22) Anmeldetag: 02.07.2018
(51) Int. Cl.: B25J 5/00, B25J 15/00, B65B 11/02, B66F 9/06, B65G 1/137

(54) **MOBILER KOMMISSIONIERROBOTER SOWIE VERFAHREN ZUM BETRIEB EINES MOBILEN KOMMISSIONIERROBOTERS**
MOBILE ORDER PICKING ROBOT AND METHOD FOR OPERATING A MOBILE ORDER PICKING ROBOT
ROBOT DE PRÉPARATION DES COMMANDES MOBILE AINSI QUE PROCÉDÉ DE FONCTIONNEMENT D'UN ROBOT DE PRÉPARATION DES COMMANDES MOBILE

(30) Priorität: 26.07.2017 DE 102017116914
(43) Veröffentlichungstag der Anmeldung: 30.01.2019
(73) Patentinhaber: Linde Material Handling GmbH, 63743 Aschaffenburg (DE)
(72) Erfinder: GROH, Jonas, 63743 Aschaffenburg (DE); KRUMBHOLZ, Peter, 63869 Jakobsthal (DE)
(74) Vertreter: Patentship Patentanwaltgesellschaft

(56) Entgegenhaltungen:
- EP-A1- 2 749 498
- WO-A1-2017/025874
- CN-A- 106 742 286
- US-B1- 9 089 969

## Beschreibung

Die Erfindung betrifft einen mobilen Kommissionierroboter sowie ein Verfahren zum Betrieb eines mobilen Kommissionierroboters dafür. Der mobile, autonome Kommissionierroboter ist mit einem Fahrzeugkörper, mit einem elektrischen Antrieb, mit einem Handhabungsmanipulator, mit einer Steuerung zur mobilen, autonomen Fahrzeugnavigation und zur Ansteuerung des Handhabungsmanipulators und mit einer Aufnahmevorrichtung für eine Lasttragvorrichtung ausgebildet.

Autonome Kommissionierroboter zur automatisierten Kommissionierung sind bekannt, die einzelne Packstücke, sogenannte Kolli, aus Regalen eines Regallager greifen und auf eine mit dem Kommissionierroboter mitgeführte Lasttragvorrichtung, beispielsweise eine Palette, ablegen.

Ein gattungsgemäßer mobiler Kommissionierroboter ist beispielsweise aus der US 9 089 969 B1 bekannt. Der mobile Kommissionierroboter der US 9 089 969 B1 umfasst einen oder mehrere Roboterarme, an deren Ende jeweils ein Endeffektor angeordnet ist, um Packstücke von einer Quellpalette aufzunehmen und auf einer Ladefläche (Zielpalette) zu kommissionieren.

Es sind stationäre Vorrichtungen zum Umwickeln von Folien an gepackten Lasttragvorrichtungen, wie beispielsweise Paletten, bekannt. Die stationären Umwickler wickeln um Waren, die auf einer Palette aufgesetzt sind, eine schützende, dehnbare und stabilisierende, selbsthaftende Klarsichtfolie.

Es ist eine stationäre Stapelhilfe für Paletten mit einem oben offenen Container für den Transport von noch ungesicherten, kommissionierten Paletten bekannt, die um die kommissionierte Palette am Schluss eine Klarsichtfolie umwickelt.

Es ist auch ein mobiler, manueller Umwickler von Paletten bekannt. Der mobile manuelle Umwickler von Paletten umfasst eine Hubgabel für eine Palette, einen elektrischen Fahrantrieb, eine manuell bedienbare Steuerung für den Hubantrieb der Hubgabel, den manuell bedienbaren Umwickler von Paletten und den Fahrantrieb. Der Richtungswechsel mit Lenkrädern erfolgt manuell.

Autonome, mobile Kommissionierroboter sind bekannt. Diese Kommissionierroboter haben einen Antrieb und eine Steuerung und ein Navigationssystem, in die ein vorgegebener Fahrweg mittels digitaler Daten übertragen wurde. Der autonome mobile Kommissionierroboter ist somit in der Lage autonom durch ein Warenlager zu fahren und Packstücke autonom an einer Quellposition aufzunehmen und auf ein mit dem Kommissionierroboter mitgeführte Lasttragvorrichtung, beispielsweise eine Palette, abzusetzen. Die Kommissionierroboter haben einen Handhabungsmanipulator mit einem Arm, an dem ein Lasttragmittel und eine Bilderkennung angeordnet sind.

Der vorliegenden Erfindung liegt die Aufgabe zugrunde, vollautomatisiertes Kommissionieren von Waren aus einem Warenlager hinsichtlich der Stabilität von kommissionierten Paletten zu verbessern.

Die Aufgabe wird durch einen Kommissionierroboter und ein Verfahren mit den Merkmalen der unabhängigen Ansprüche 1 und 6 gelöst. Vorteilhafte Weiterbildungen der Erfindung sind in den Unteransprüchen angegeben.

Diese Aufgabe wird erfindungsgemäß durch die Merkmale im kennzeichnenden Teil der Ansprüche 1 und 6 gelöst. Mit der Ladungssicherungsvorrichtung können Packstücke sofort auf der Lasttragvorrichtung nach der Kommissionierung möglichst versandfertig für einen LKW-Transport gesichert werden.

Der autonome Kommissionierroboter verbessert somit eine vollautomatische Kommissionierung von Packstücken, die von einer Quellposition aufgenommen und auf einer auf dem Kommissionierroboter, d.h. dem Fahrzeug, angeordneten Lasttragvorrichtung, das heißt einer Zielpalette, abgesetzt werden. Dieser Vorgang wird als "Picking" oder "Kommissionieren" bezeichnet. Somit wird die Stabilität beim Kommissionieren von sortenreinen Lasttragvorrichtungen zu gemischten Lasttragvorrichtungen verbessert. Aufgrund von inhomogenen Packungsgrößen der Packstücke und oftmals einer Inkompatibilität von Rastnasen unterschiedlicher Verpackungen wird die Stabilität des Gesamtgebindes auf der Lasttragvorrichtung beeinträchtigt. Diese Beeinträchtigung wird mittels der Ladungssicherungsvorrichtung entgegengewirkt oder diese sogar vollständig eliminiert.

Eine Anpassung der Fahrweise aufgrund einer Instabilität des Gesamtgebindes, wie dies bei manueller Kommissionierung möglich ist, muss aufgrund der nun erfolgten zusätzlichen Ladungssicherung nicht mehr vorgenommen werden.

Gemäß einer weiterbildenden Ausführungsform, welche nicht Teil der Erfindung ist, um effizient den Kommissioniervorgang durchzuführen, bei gleichzeitiger Stabilitätssicherung, weist der Handhabungsmanipulator am Ende eines Arms neben der Ladungssicherungsvorrichtung ein Lasttragmittel auf. Somit können ohne wesentlichen Zeitverzug Packstücke aus dem Lager entnommen werden, auf die Lasttragvorrichtung gestapelt werden und im selben Vorgang mit der Ladungssicherungsvorrichtung gesichert werden.

Gemäß der Erfindung weist der Handhabungsmanipulator am Ende des Arms eine kombinierte Lasttragmittel-Ladungssicherungsvorrichtung auf. Dies ermöglicht einen schnellen Wechsel zwischen Kommissionieren von Packstücken mit dem Lasttragmittel und sichern der Packstücke mittels der Ladungssicherungsvorrichtung auf der Lasttragvorrichtung.

Um den Handhabungsmanipulator leicht und energiesparend im Betrieb auszubilden, weist der Handhabungsmanipulator gemäß einer alternativen Ausführungsform, welche nicht Teil der Erfindung ist, eine Wechselvorrichtung zum Wechseln der Ladungssicherungsvorrichtung mit dem Lasttragmittel auf.

Gemäß einer alternativen Ausführungsform, welche nicht Teil der Erfindung ist, weist der Kommissionierroboter einen ersten Handhabungsmanipulator mit dem Lasttragmittel und einen zweiten Handhabungsmanipulator mit der Ladungssicherungsvorrichtung auf.

Weiterbevorzugt umfasst die Ladungssicherungsvorrichtung eine Wickelrolle mit Wickelmaterial zum Umwickeln von auf der Lasttragvorrichtung gepackten Packstücken. Somit können, insbesondere inhomogene, Packstücke mittels der Wickelrolle zur Verbesserung der Stabilität gesichert werden.

Ein leichtes effektives Wickelmaterial ist eine dehnbare, bevorzugt selbsthaftende, Folie. Die Folie ist kostengünstig erhältlich und erhöht das Gesamtgewicht nicht wesentlich.

Alternativ ist das Wickelmaterial als Band, insbesondere Gurt oder Netz ausgebildet. Dies hat den Vorteil, dass Ressourcen geschont werden, da das Wickelmaterial wiederverwendet wird und nur kurzzeitig als Stabilisierungshilfe während des Kommissioniervorgangs eingesetzt wird.

Gemäß besonderen Ausführungsform ist einer Wickelrolle mit dem Wickelmaterial am Fahrzeug fest montiert, beispielsweise das lose Ende des Bandes am Kommissionierroboter fest montiert. Somit kann das Wickelmaterial wieder verwendet werden und dient ausschließlich der Ladungssicherung während des Kommissionierens.

Bei einer alternativen Ausführungsform ist anstelle einer Befestigung des losen Endes des Gurtes am Fahrzeug das lose Ende auch am Gurt selbst befestigt. Dabei wird eine Schlinge um die Lasttragvorrichtung geformt. Der Kommissionierroboter kann mit seinem Handhabungsmanipulator auch in einem Betrieb mit zwei Lasttragvorrichtungen hintereinander diese unabhängig voneinander sichern.

Weiterbevorzugt ist das Wickelmaterial, beispielsweise das Band, mit einem Aufrollmechanismus als Teil der Ladungssicherungsvorrichtung angeordnet. Der Aufrollmechanismus wirkt im Zusammenspiel mit dem Handhabungsmanipulator und dient der Ladungssicherung. Alternativ anstatt des Aufrollmechanismus kann ein elastisches Band oder Gummiband die Ladungssicherungsvorrichtung umfassen. Der Aufrollmechanismus kann auch fest am Kommissionierroboter befestigt sein, so dass das lose Ende vom Handhabungsmanipulator bewegt wird.

Gemäß einer alternativen Ausführungsform ist das Wickelmaterial als Band/Gurt an der Lasttragvorrichtung, beispielsweise einer Palette, befestigt. Die Gurte sind somit Bestandteil eines Umlaufsystems. Die Gurte bleiben an der Lasttragvorrichtung/Packstücke, d.h. Ware. Der Kommissionierroboter nimmt ein neues Lasttragvorrichtungs-Set mit Gurten auf.

Gemäß einer weiterbildenden Ausführungsform ist die Aufnahmevorrichtung zur Aufnahme der Lasttragvorrichtung, insbesondere um 360°, bevorzugt in horizontaler Ebene drehbar ausgebildet. Somit wird die Sicherung möglicherweise schneller, effizienter und energiesparsamer durchgeführt. Die Ansteuerung der Ladungssicherungsvorrichtung ist effizienter analog zu einem stationären Wickler mit Wickelmaterial um eine Lasttragvorrichtung.

Die Aufgabe wird auch durch ein Verfahren zum Betreiben eines mobilen, autonomen, oben beschriebenen Kommissionierroboters gelöst, aufweisend die Merkmale des kennzeichnenden Teils des Anspruchs 6.

Mit einer Ladungssicherungsvorrichtung, die an einem Ende eines Arms des Handhabungsmanipulators angeordnet ist, werden auf der Lasttragvorrichtung gepackte Packstücke gesichert.

Das Verfahren ermöglicht somit eine höhere Kommissionierung von Packstücken auf der Lasttragvorrichtung und macht somit die Kommissionierung effizienter.

Gemäß eines weiterbildenden Verfahrens werden mit der Ladungssicherungsvorrichtung untere auf der Lasttragvorrichtung gepackte Packstücke während eines Kommissionvorganges des Handhabungsmanipulators gesichert. Somit kann insbesondere eine dehnbare Folie abhängig von den beladenen Packstücken oder der Stapelhöhe zum Einsatz kommen, um die unteren Lagen zu sichern. Es können höhere Stapelhöhen erreicht werden und mehr Packstücke auf die Lasttragvorrichtung gepackt werden. Um das Verfahren noch effizienter auszubilden, werden während einer Fahrt des Kommissionierroboters Packstücke mittels der Ladungssicherungsvorrichtung gesichert. Die Umschlagsleitung des Kommissionierroboters wird somit nicht durch das Sichern der Packstücke beeinträchtigt.

Um die Ladungssicherungsvorrichtung resourcenschonend auszubilden, werden die Packstücke mittels mindestens eines Gurts gesichert, wobei insbesondere die Gurte am Fahrzeug oder an der Lasttragvorrichtung an zumindest einem Ende befestigt sind, und nach vollständiger Kommissionierung der Packstücke auf der Lasttrageinrichtung wird der Gurt mittels des Handhabungsmanipulators entfernt und die Packstücke werden mittels einer dehnbaren Folie gesichert.

Gemäß eines weiterbevorzugten Verfahrens werden mit dem Handhabungsmanipulator Zwischenlagen, z.B. aus Karton, zwischen die Packstücke gepackt. Somit wird eine höhere Stabilität erzielt und die Lasttragvorrichtung kann höher gepackt werden.

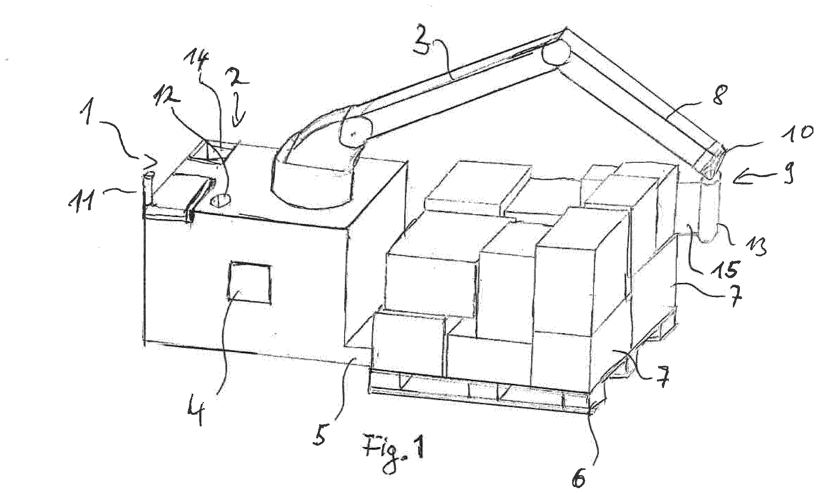

Weitere Vorteile und Einzelheiten der Erfindung werden anhand des in der schematischen Figur dargestellten Ausführungsbeispiels näher erläutert. Hierbei zeigt
- Figur 1: eine perspektivische Ansicht eines mobilen Kommissionierroboters, welcher nicht der erfindungsgemäßen Ausführung entspricht.

Die Fig. 1 zeigt einen mobilen, autonomen Kommissionierroboter 1 mit einem Fahrzeugkörper 2, mit einem verdeckten, nicht explizit dargestellten elektrischen Antrieb, mit einem Handhabungsmanipulator 3 und einer Aufnahmevorrichtung 5 für eine Lasttragvorrichtung 6. Der mobile, autonome Kommissionierroboter 1 hat eine Steuerung 4 zur mobilen, autonomen Fahrzeugnavigation und zur Ansteuerung des Handhabungsmanipulators 3 eingebaut.

Die Aufnahmevorrichtung 5 ist bevorzugt von einer Lastgabel und die Lasttragvorrichtung 6 von einer Palette gebildet.

Auf die Lasttragvorrichtung 6 ist eine Vielzahl von Packstücken 7, die aus einem Warenlager von dem Kommissionierroboter 1 mittels des Handhabungsmanipulators 3 kommissioniert werden, aufgepackt. Der Handhabungsmanipulator 3 weist an einem Ende seines Arms 8 eine Ladungssicherungsvorrichtung 9 zum Sichern von auf der Lasttragvorrichtung 6 gepackten Packstücken 7 auf.

Die in der Fig. 1 gezeigte besondere Ausführungsform weist am Ende des Arms 8 eine Wechselvorrichtung 10 zum Wechseln zwischen der Ladungssicherungsvorrichtung 9 und einem Lasttragmittel 11 auf. Das Lasttragmittel 11 dient dazu, Packstücke 7 aus einzelnen Regalfächern, die in Regalen vom nicht gezeigten Lager gelagert sind, zu erfassen und die Packstücke 7 auf der Lasttragvorrichtung 6 steuerbar abzulegen. Der, in der Fig. 1 gezeigte Handhabungsmanipulator 3 wechselt somit das Lasttragmittel 11 nachdem die Packstücke 7 auf der Lasttragvorrichtung 6 gepackt sind am Ende seines Arms 8 aus und bestückt das Ende des Arms 8 mit der Ladungssicherungsvorrichtung 9.

Die Ladungssicherungsvorrichtung 9 ist hierfür an einem Lagerplatz 12 im Fahrzeugkörper 2 angeordnet. Die Wechselvorrichtung 10 wird auch von der Steuerung 4 angesteuert. Die Ladungssicherungsvorrichtung 9 umfasst, wie in der Fig. 1 gezeigt, eine Wickelrolle 13 mit einem Wickelmaterial 15, um die Packstücke 7 zur Stabilitätssicherung und zum Zusammenhalt mittels des Handhabungsmanipulators 3 zu umwickeln.

Bevorzugt ist das Wickelmaterial 15 eine dehnbare selbsthaftende Klarsichtfolie. Es versteht sich, dass das Wickelmaterial 15 ein Band oder ein Gurt sein kann oder netzartig ausgebildet ist und um die Packstücke 7 gewickelt wird.

Das Wickelmaterial 15 kann als Gurt entweder am Fahrzeugkörper 2 oder an der Lasttragvorrichtung 6 befestigt sein. In einem solchen Fall werden die gepackten Packstücke 7 während eines Kommissioniervorgangs gesichert und sobald die Lasttragvorrichtung fertig gepackt ist, wird der Gurt wieder entfernt und mit einer dehnbaren Folie, die für einen LKW-Transport vorgesehen ist, beispielsweise vom Handhabungsmanipulator 3 vollständig neuumwickelt.

Gemäß eines weiter bevorzugten Verfahrens werden mit dem Handhabungsmanipulator 3 während eines Kommissioniervorgangs untere, auf der Lasttragvorrichtung 6 gepackte Packstücke 7 mit der Ladungssicherungsvorrichtung 9 mit Wickelmaterial 15 gesichert. Um noch zeiteffizienter die Packstücke 7 während einer vollautomatischen Kommissionierung zu sichern, werden die Packstücke 7 während einer Fahrt des Kommissionierroboters 1 mittels der Ladungssicherungsvorrichtung 9 gesichert.

Der Fahrzeugkörper 2 umfasst einen Speicher für Zwischenlagen 14, die Zwischenlagen 14 sind beispielsweise Kartonzwischenlagen, um Höhenunterschiede der Packstücke 7 beim Packen der Lasttragvorrichtung 6 zu stabilisieren.

Eine nicht dargestellte Ausführungsform umfasst eine Aufnahmevorrichtung 5, die mit einem Drehteller ausgebildet ist, um die Lasttragvorrichtung 6 mit darauf gepackten Packstücken 7 um eine vertikale zentrale Achse zu drehen, während mit der Ladungssicherungsvorrichtung 9 Wickelmaterial 15 zur Sicherung der Packstücke 7 gewickelt wird.

Durch die Sicherung der Packstücke 7 mit der Ladungssicherungsvorrichtung 9 kann eine Lasttragvorrichtung 6, insbesondere eine Palette, mittels des Handhabungsmanipulators 3 höher kommissioniert werden und der Kommissionierroboter 1 kann schneller beschleunigt und verzögert werden, insbesondere bei Kurvenfahrt, ohne die Packstücke 7 zu verlieren oder die Stabilität des Gebindes aus Packstücken 7 wesentlich zu beeinträchtigen.

Eine höhere Leistung im Kommissionierbetrieb der Packstücke 7 aufgrund dieses Verfahrens und mittels des Kommissionierroboters 1 ist möglich. Eine wegoptimierte Kommissionierung statt einer stabilitätsoptimierten Reihenfolge der Kommissionierung ist, insbesondere deshalb, realisierbar, da die Packstücke 7 bereits bei der Kommissionierung von dem Kommissionierroboter 1 automatisch gesichert werden. Somit ist eine instabilere Beladung der Lasttragvorrichtung 6 mittels der Packstücke 7 möglich. Gegebenenfalls kann ein nachträgliches Umwickeln mit einer dehnbaren Folie der fertig gepackten Lasttragvorrichtung 6, beispielsweise bei einer Palette, an einer stationären Umwickelvorrichtung für den weiteren Transport zum Beispiel auf dem LKW entfallen.

## Patentansprüche

1. Mobiler Kommissionierroboter (1) mit einem Fahrzeugkörper (2), mit einem elektrischen Antrieb, mit einem einen Arm umfassenden Handhabungsmanipulator (3), mit einer Steuerung (4) zur mobilen, autonomen Fahrzeugnavigation und zur Ansteuerung des Handhabungsmanipulators (3), mit einer Aufnahmevorrichtung (5) für eine Lasttragvorrichtung (6), wobei der Handhabungsmanipulator (3) am Ende seines Arms ein Lasttragmittel (11) aufweist, mit dem Packstücke (7) auf die Lasttragvorrichtung (6) stapelbar sind, **dadurch gekennzeichnet, dass** der Handhabungsmanipulator (3) an dem Ende seines Arms (8) eine Ladungssicherungsvorrichtung (9) zum Sichern von auf der Lasttragvorrichtung (6) gepackten Packstücken (7) aufweist,
wobei der Handhabungsmanipulator (3) am Ende des Arms (8) eine kombinierte Lasttragmittel-Ladungssicherungsvorrichtung aufweist,
wobei der Fahrzeugkörper (2) Speicher für Zwischenlagen (14) umfasst, um Höhenunterschiede der Packstücke (7) beim Packen der Lasttragvorrichtung (6) zu stabilisieren.

2. Kommissionierroboter (1) nach Anspruch 1, **dadurch gekennzeichnet, dass** die Ladungssicherungsvorrichtung (9) eine Wickelrolle (13) mit Wickelmaterial (15) zum Umwickeln von auf der Lasttragvorrichtung (6) gepackten Packstücken (7) umfasst.

3. Kommissionierroboter (1) nach Anspruch 2, **dadurch gekennzeichnet, dass** das Wickelmaterial (15) eine dehnbare, bevorzugt selbsthaftende, Folie umfasst.

4. Kommissionierroboter (1) nach Anspruch 2, **dadurch gekennzeichnet, dass** das Wickelmaterial (15) als Band, insbesondere Gurt oder Netz ausgebildet ist.

5. Kommissionierroboter (1) nach einem der Ansprüche 1 bis 4, **dadurch gekennzeichnet, dass** die Aufnahmevorrichtung (5) zur Aufnahme der Lasttragvorrichtung (6) drehbar ausgebildet ist.

6. Verfahren zum Betreiben eines mobilen, autonomen Kommissionierroboters nach einem der Ansprüche 1 bis 5, wobei der Kommissionierroboter (1) mit einem Fahrzeugkörper (2), mit einem elektrischen Antrieb, mit einer Aufnahmevorrichtung (5) für eine Lasttragvorrichtung (6), mit einem einen Arm umfassenden Handhabungsmanipulator (3), wobei der Handhabungsmanipulator (3) am Ende seines Arms ein Lasttragmittel (11) aufweist, mit dem Packstücke (7) auf die Lasttragvorrichtung (6) gestapelt werden, und mit einer Steuerung (4) ausgebildet ist, mit der der mobile, autonome Kommissionierroboter navigiert und mit der der Handhabungsmanipulator (3) angesteuert wird, **dadurch gekennzeichnet, dass** mit einer Ladungssicherungsvorrichtung (9), die an dem Ende des Arms des Handhabungsmanipulators (3) angeordnet ist, auf der Lasttragvorrichtung (6) gepackte Packstücke (7) gesichert werden, wobei der Handhabungsmanipulator (3) am Ende des Arms (8) eine kombinierte Lasttragmittel-Ladungssicherungsvorrichtung aufweist, wobei der Fahrzeugkörper (2) Speicher für Zwischenlagen (14) umfasst, um Höhenunterschiede der Packstücke (7) beim Packen der Lasttragvorrichtung (6) zu stabilisieren.

7. Verfahren nach Anspruch 6, **dadurch gekennzeichnet, dass** mit der Ladungssicherungsvorrichtung (9) untere auf der Lasttragvorrichtung (6) gepackte Packstücke (7) während eines Kommissionvorganges des Kommissionierroboters (1) gesichert werden.

8. Verfahren nach Anspruch 6 oder 7, **dadurch gekennzeichnet, dass** während einer Fahrt des Kommissionierroboters Packstücke (7) mittels der Ladungssicherungsvorrichtung (9) gesichert werden.

9. Verfahren nach einem der Ansprüche 6 bis 8, **dadurch gekennzeichnet, dass** die Packstücke (7) mittels mindestens eines Gurts gesichert werden, wobei die Gurte am Fahrzeug oder an der Lasttragvorrichtung (6) an zumindest einem Ende befestigt sind und nach vollständiger Kommissionierung der Packstücke (7) auf der Lasttrageinrichtung (6) der Gurt mittels des Handhabungsmanipulators (3) entfernt wird und die Packstücke (7) mittels einer dehnbaren Folie gesichert werden.

10. Verfahren nach einem der Ansprüche 6 bis 9, **dadurch gekennzeichnet, dass** mit dem Handhabungsmanipulator (3) Zwischenlagen zwischen die Packstücke (7) gepackt werden.

## Claims

1. Mobile order picking robot (1) having a vehicle body (2), having an electrical drive, having a handling manipulator (3) comprising an arm, having a controller (4) for mobile, autonomous vehicle navigation and for activating the handling manipulator (3), having a receiving device (5) for a load carrying device (6), wherein the handling manipulator (3) has at the end of its arm a load carrying means (11), with which packages (7) can be stacked on the load carrying device (6), **characterized in that** the handling manipulator (3) has at the end of its arm (8) a load securing device (9) for securing packages (7) packed on the load carrying device (6),
wherein the handling manipulator (3) has at the end of the arm (8) a combined load carrying means-load securing device,
wherein the vehicle body (2) comprises stores for intermediate layers (14), in order to stabilize height differences of the packages (7) when packing the load carrying device (6).

2. Order picking robot (1) according to Claim 1, **characterized in that** the load securing device (9) comprises a winding roll (13) with winding material (15) for wrapping packages (7) packed on the load carrying device (6).

3. Order picking robot (1) according to Claim 2, **characterized in that** the winding material (15) comprises an extensible, preferably self-adhesive, film.

4. Order picking robot (1) according to Claim 2, **characterized in that** the winding material (15) is formed as a band, in particular a belt or net.

5. Order picking robot (1) according to one of Claims 1 to 4, **characterized in that** the receiving device (5) is designed to be rotatable to receive the load carrying device (6).

6. Method for operating a mobile, autonomous order picking robot according to one of Claims 1 to 5, wherein the order picking robot (1) is constructed with a vehicle body (2), with an electrical drive, with a receiving device (5) for a load carrying device (6), with a handling manipulator (3) comprising an arm, wherein the handling manipulator (3) has at the end of its arm a load carrying means (11) with which packages (7) are stacked on the load carrying device (6), and with a controller (4) with which the mobile, autonomous order picking robot is navigated and with which the handling manipulator (3) is activated, **characterized in that** packages (7) packed on the load carrying device (6) are secured with a load securing device (9), which is arranged at the end of the arm of the handling manipulator (3), wherein the handling manipulator (3) has at the end of the arm (8) a combined load carrying means-load securing device, wherein the vehicle body (2) comprises stores for intermediate layers (14) in order to stabilize height differences of the packages (7) when packing the load carrying device (6).

7. Method according to Claim 6, **characterized in that** lower packages (7) packed on the load carrying device (6) are secured with the load securing device (9) during an order picking process of the order picking robot (1).

8. Method according to Claim 6 or 7, **characterized in that** packages (7) are secured by means of the load securing device (9) while the order picking robot is travelling.

9. Method according to one of Claims 6 to 8, **characterized in that** the packages (7) are secured by means of at least one belt, wherein the belts are fastened to the vehicle or to the load carrying device (6) at at least one end and, after the complete order picking of the packages (7) on the load carrying device (6), the belt is removed by means of the handling manipulator (3) and the packages (7) are secured by means of an extensible film.

10. Method according to one of Claims 6 to 9, **characterized in that** intermediate layers are packed between the packages (7) using the handling manipulator (3).

## Revendications

1. Robot mobile de préparation de commandes (1) comprenant une caisse de véhicule (2), un entraînement électrique, un manipulateur de manutention (3) comprenant un bras, une commande (4) destinée la navigation mobile et autonome du véhicule et à la commande du manipulateur de manutention (3), un dispositif de réception (5) destiné à un dispositif de support de charges (6), le manipulateur de manutention (3) comportant à l'extrémité de son bras un moyen de support de charge (11) qui permet d'empiler des colis (7) sur le dispositif de support de charges (6), **caractérisé en ce que** le manipulateur de manutention (3) comporte à l'extrémité de son bras (8) un dispositif de sécurisation de charges (9) destiné à sécuriser des colis (7) chargés sur le dispositif de support de charges (6),
le manipulateur de manutention (3) comportant à l'extrémité du bras (8) un moyen de support de charge et un dispositif de sécurisation de charges combinés l'un à l'autre,
la caisse de véhicule (2) comprenant un espace de stockage destiné à des couches intermédiaires (14) afin de stabiliser les différences de hauteur des colis (7) lors du chargement du dispositif de support de charges (6).

2. Robot de préparation de commandes (1) selon la revendication 1, **caractérisé en ce que** le dispositif de sécurisation de charges (9) comprend un rouleau d'enroulement (13) pourvu d'un matériau d'enroulement (15) destiné à être enrouler autour des colis (7) chargés sur le dispositif de support de charges (6).

3. Robot de préparation de commandes (1) selon la revendication 2, **caractérisé en ce que** le matériau d'enroulement (15) comprend un film étirable, de préférence auto-adhésif.

4. Robot de préparation de commandes (1) selon la revendication 2, **caractérisé en ce que** le matériau d'enroulement (15) est réalisé sous forme d'une bande, notamment d'une sangle ou d'un filet.

5. Robot de préparation de commandes (1) selon l'une des revendications 1 à 4, **caractérisé en ce que** le dispositif de réception (5) est conçu de manière rotative pour recevoir le dispositif de support de charges (6).

6. Procédé de fonctionnement d'un robot mobile et autonome de préparation de commandes selon l'une des revendications 1 à 5, le robot de préparation de commandes (1) comportant une caisse de véhicule (2), un entraînement électrique, un dispositif de réception (5) destiné à un dispositif de support de charges (6), un manipulateur de manutention (3) comprenant un bras, le manipulateur de manutention (3) comportant à l'extrémité de son bras un moyen de support de charges (11) permettant d'empiler des paquets (7) sur le dispositif de support de charges (6), et étant conçu avec une commande (4) permettant de faire naviguer le robot mobile et autonome de préparation de commandes et de commander le manipulateur de manutention (3), **caractérisé en ce que** les colis (7) chargés sur le dispositif de support de charges (6) sont sécurisés par un dispositif de sécurisation de charges (9) qui est disposé à l'extrémité du bras du manipulateur de manutention (3), le manipulateur de manutention (3) comportant à l'extrémité du bras (8) un moyen de support de charges et un dispositif de sécurisation de charges combinés l'un à l'autre, la caisse de véhicule (2) comprenant un espace de stockage destiné à des couches intermédiaires (14) afin de stabiliser les différences de hauteur des colis (7) lors du chargement du dispositif de support de charges (6).

7. Procédé selon la revendication 6, **caractérisé en ce que** le dispositif de sécurisation de charges (9) est utilisé pour sécuriser des colis inférieurs (7) chargés sur le dispositif de support de charges (6) lors d'un processus de préparation de commandes du robot de préparation de commandes (1).

8. Procédé selon la revendication 6 ou 7, **caractérisé en ce que** les colis (7) sont sécurisés au moyen du dispositif de sécurisation de charges (9) pendant le déplacement du robot de préparation de commandes.

9. Procédé selon l'une des revendications 6 à 8, **caractérisé en ce que** les colis (7) sont sécurisés au moyen d'au moins une sangle, les sangles étant fixées au véhicule ou au dispositif de support de charge (6) à au moins une extrémité et, une fois que tous les paquets (7) de la préparation de commande sont chargés sur le dispositif de support de charges (6), la sangle étant retirée au moyen du manipulateur de manutention (3) et les colis (7) étant sécurisés au moyen d'un film étirable.

10. Procédé selon l'une des revendications 6 à 9, **caractérisé en ce que** des couches intermédiaires sont chargées entre les colis (7) avec le manipulateur de manutention (3).
